# EUROPÄISCHE PATENTSCHRIFT

(11) **EP 2 318 291 B1**
(45) Veröffentlichungstag und Bekanntmachung des Hinweises auf die Patenterteilung: **28.01.2015**
(21) Anmeldenummer: 09777610.8
(22) Anmeldetag: 03.08.2009
(51) Int. Cl.: B65G 1/04

(54) **LAGERANORDNUNG ZUR EIN- UND AUSLAGERUNG VON LADEGUT AN BZW. VON LAGERPLÄTZEN**
STORAGE ARRANGEMENT FOR PLACING ITEMS TO BE STORED IN STORAGE LOCATIONS AND REMOVING SAID ITEMS THEREFROM
AGENCEMENT D'ENTREPOSAGE POUR METTRE EN STOCK ET SORTIR DE STOCK DES CHARGES DANS DES EMPLACEMENTS DE STOCKAGE

(30) Priorität: 01.08.2008 DE 202008010293 U
(43) Veröffentlichungstag der Anmeldung: 11.05.2011
(73) Patentinhaber: Westfalia Intralogistic GmbH, 33428 Harsewinkel (DE)
(72) Erfinder: UPMEYER, Matthias, 33829 Borgholzhausen (DE)
(74) Vertreter: Wagner, Carsten
(86) Internationale Anmeldenummer: PCT/EP2009/005602
(87) Internationale Veröffentlichungsnummer: WO 2010/012499

(56) Entgegenhaltungen:
- EP-A- 0 426 528
- EP-A- 1 659 077
- CH-A- 538 402
- DE-A1- 4 028 059
- US-A- 3 432 046

## Beschreibung

Die Erfindung betrifft eine Lageranordnung der im Oberbegriff des Anspruch 1 genannten Art zur Ein- und Auslagerung von Lagergut an bzw. von Lagerplätzen.

Im Bereich der Regallagertechnik erfolgt die Bedienung von in Regalen angeordneten Lagerplätzen durch Regalbediengeräte, die zur Beschleunigung der Ein- bzw. Auslagerung des Lagergutes häufig automatisiert oder teilautomatisiert sind. Es existieren unterschiedliche Regalbediengerätearten, die beispielsweise in flurgebundene und flurfreie Regalbediengeräte unterscheidbar sind.

Der Aufbau einer Lagereinrichtung ist im wesentlichen bestimmt durch die Lageranordnung, die eine Vielzahl an Variationen erlaubt. Lageranordnungen sind beispielsweise bekannt aus WO 2008/019842 A1 als Lageranordnung zur Lagerung von vorzugsweise auf Paletten aufgenommenen Gütern, mit einer Regalanordnung, die eine Mehrzahl von übereinander angeordneten Lagerebenen aufweist, auf denen eine Mehrzahl von Lagerplätzen zur Lagerung der Güter gebildet ist, wobei Regalförderzeuge zum Einlagern der Güter an den Lagerplätzen und zum Auslagern der Güter von den Lagerplätzen verwendet werden. Diese Lageranordnung ist dadurch gekennzeichnet, daß wenigstens zwei Regalförderzeuge in Vextikalrichtung übereinander angeordnet sind, und daß die Lagerebenen in Vertikalrichtung in Höhenzonen unterteilt sind, von denen jede aus wenigstens zwei in Vertikalrichtung aufeinanderfolgenden Lagerebenen besteht. Ferner ist sie dadurch gekennzeichnet, daß jeder Höhenzone wenigstens ein Regalförderzeug zugeordnet ist, mittels dessen Güter in den Lagerebenen der jeweiligen Höhenzone ein- und auslagerbar sind und daß zur fördertechnischen Verbindung der Regalförderzeuge mit einem Ein- und Ausgabebereich der Lageranordnung wenigstens ein Senkrechtförderer vorgesehen ist.

Der Erfindung liegt die Aufgabe zugrunde, eine Lageranordnung der im Oberbegriff des Anspruchs 1 genannten Art anzugeben, die eine hohe wirtschaftliche Effizienz einer Lageranordnung mit geringen Investitionskosten realisiert.

Diese Aufgabe wird durch die im Anspruch 1 angegebene Lehre gelöst, indem die Investitionskosten einer Lageranordnung durch eine wirtschaftlich angepaßte und logistisch verbesserte Kombination unterschiedlicher Regalbediengerätearten reduziert werden.

Die Erfindung löst sich von dem Gedanken, in einer Lageranordnung lediglich eine Regalbediengeräteart (flurfrei/ flurgebunden) zu verwenden.

Erfingdungsgemäß ist statt dessen in einer Lageranordnung zwischen den zwei äußeren Gassen wenigstens eine innere Gasse angeordnet, wobei zur Bedienung der in den äußeren Gassen vorgesehenen Lagerplätze wenigstens ein flurgebundenes Regalbediengerät vorgesehen ist, und zur Bedienung der in der inneren Gasse oder der in den inneren Gassen vorgesehenen Lagerplätze wenigstens ein flurfreies Regalbediengerät vorgesehen ist.

Im Unterschied zu den bekannten Lageranordnungen werden durch die Erfindung die durch die Anordnung der Regale gebildeten Gassen derart aufgeteilt werden, daß ein äußerer und ein innerer Bereich entstehen. Die Bereiche sind bezogen auf die verwendete Regalbediengeräteart (flurfrei/ flurgebunden) jeweils homogen.

Auf überraschende Weise hat sich gezeigt, daß durch die erfindungsgemäße Kombination der Gliederung der Gassen in o. g. homogene Bereiche sowohl die Investitionskosten verringerbar sind als auch signifikante Kosteneinsparungen für die Ein- und Auslagerungsvorgänge erzielbar sind.

Dadurch ist es erstmals möglich, weitere Kosteneinsparungen zu erschließen, die mit den bekannten Lageranordnungen nicht erreichbar sind.

Ferner ist es möglich, daß ein Regal logistisch sowohl einer äußeren Gasse wie auch einer inneren Gasse zugeordnet ist. Dies ist insbesondere an den Grenzen des inneren Bereichs möglich.

Unter Lagergut werden erfindungsgemäß alle lagerfähigen Güter, Materialien und Substanzen, Produkte sowie Vorprodukte wie auch Teile und Stückgut verstanden, die mit bzw. ohne Lagerungshilfsmittel, wie z. B. Verpackungen oder Paletten, in Regalen lagerbar sind.

Eine vorteilhafte Weiterbildung der Erfindung sieht vor, daß das flurgebundene Regalbediengerät ein Regalförderzeug ist. Regalförderzeuge sind schienengebundene Regalbediengeräte, die den Vorteil bieten, daß die Investitionskosten und auch die Instandhaltungskosten vergleichsweise gering sind. Ferner kann ein Wechsel eines flurgebundenen Regalbediengerätes schnell und einfach erfolgen.

Eine vorteilhafte Weiterbildung der Erfindung sieht vor, daß das flurfreie Regalbediengerät ein an einer Krankatze angeordnetes Lastaufnahmemittel aufweist. Die vertikale Bewegung des Lastaufnahmemittels kann beispielsweise durch Seile erreicht werden, die auf- oder abrollbar sind. Anstelle der Seile sind beispielsweise auch Ketten oder Riemen verwendbar. Durch die vergleichsweise geringen bewegten Massen dieses Regalbediengerätes ist es möglich, auch schwere Lagergüter schnell zu bewegen und gleichsam die Last auf die Tragvorrichtung dieses Regalbediengerätes zu reduzieren. Diese Art des flurfreien Regalbediengerätes zeichnet sich auch dadurch aus, daß die Lagervorgänge deutlich beschleunigt werden können. Zudem sind diese Systeme hochverfügbar. Eine Ausführungsart ist beispielsweise durch DE 202 03 604 U1 bekannt.

Ferner besteht eine vorteilhafte Weiterbildung der Erfindung darin, daß in einer im wesentlichen orthogonalen Richtung zur Längserstreckungsrichtung wenigstens einer Gasse wenigstens eine Verbindungsgasse angeordnet ist.

Dabei kennzeichnet die Lärigserstreckung einer Gasse deren Länge. Demgegenüber ist die Breite (Quererstreckung) einer Gasse im wesentlichen durch den Abstand der die Gasse begrenzenden Regale zueinander gegeben.

Die Verwendung von Verbindungsgassen verkürzt die logistischen Wege innerhalb einer Lageranordnung, um beispielsweise Lagergut aus einer Gasse in eine andere Gasse zu transportieren. Durch die wegverkürzung sind weitere Zeit- und Kosteneinsparungen realisierbar.

Erfindungsgemäß ist wenigstens eine Verbindungsgasse wenigstens zwei inneren Gassen angeordnet. Dadurch sind die Wege zwischen den Gassen optimierbar, indem beispielsweise hochfrequentierte Lagerplätze zusammengefaßt werden, um einen Gassenwechsel des Lagerplatzes eines Lagergutes schnell vornehmen zu können. Zudem können sogenannte Umsetzereinheiten verwendet werden, um das flurfreie Regalbediengerät von einer Gasse in eine andere Gasse umzusetzen.

Die Verbindungsgasse kann beispielsweise zur Mitte des inneren Bereiches angeordnet sein, um die Lagerungsflächen möglichst groß zu halten. Die Verbindungsgassen müssen jedoch nicht über die volle Höhe des inneren Bereiches erstreckt sein.

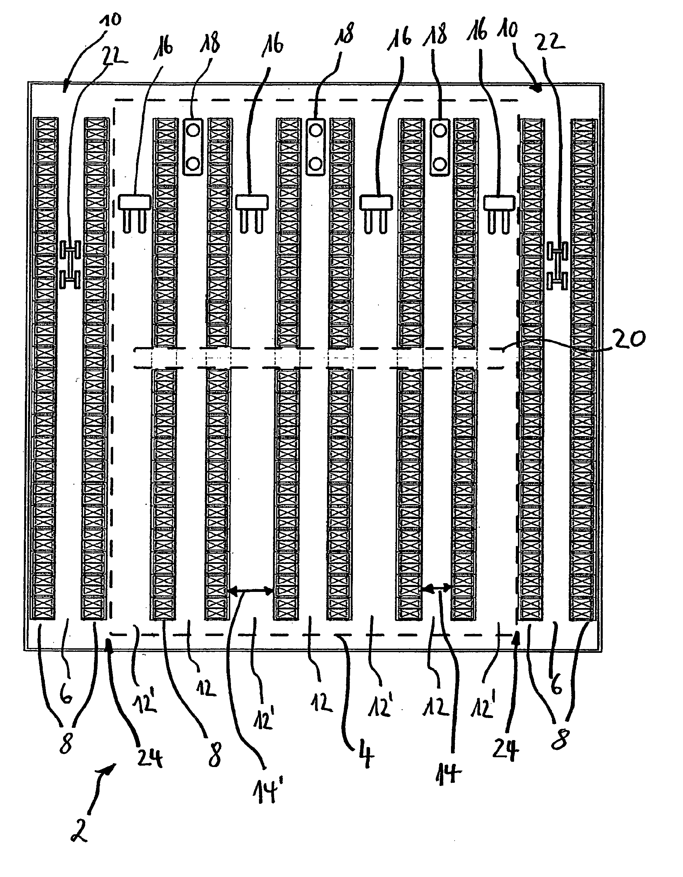

Die Erfindung wird nachfolgend anhand der beigefügten Zeichnung näher erläutert, in der ein Ausführungsbeispiel einer nicht erfindungsgemäßen Lageranordnung zur Ein- und Auslagerung von Lagergut an bzw. von Lagerplätzen dargestellt ist.

Die einzige Figur der Zeichnung zeigt schematisch ein Ausführungsbeispiel einer nicht erfindungsgemäßen Lageranordnung in einem Grundriß. Die Figur verzichtet bei der Darstellung des Ausführungsbeispiels zum besseren Verständnis auf Details.

Das in der Figur dargestellte Ausführungsbeispiel zeigt eine erfindungsgemäße Lageranordnung 2, die einen inneren Bereich 4 aufweist, der in seiner Breite durch zwei äußere Gassen 6 begrenzt ist, welche jeweils durch zwei Regale 8 begrenzt sind und jeweils einen äußeren Bereich 10 bilden.

Der innere Bereich 4 ist wiederum durch Regale 8 gebildet, die innerhalb der Figur zur besseren Übersicht nur einmal durch das Bezugszeichen 8 gekennzeichnet sind. Die durch das Bezugszeichen 8 gekennzeichneten Regale sind in diesem Ausführungsbeispiel der erfindungsgemäßen Lageranordnung 2 als Hochregale ausgebildet und in ihrer Ausführungsart gleichartig.

Die Erfindung ist darauf jedoch nicht beschränkt, so daß die Regale 8 innerhalb der einzelnen Bereiche 4, 10 unterschiedlich ausgeführt sein können. Ferner können die Regale 8 eines inneren Bereiches 4 von den Regalen 8 eines äußeren Bereiches 10 in der Ausführungsart abweichen.

In dem inneren Bereich 4 begrenzen wiederum jeweils zwei Regale 8 eine innere Gasse 12. Wie in der Figur ersichtlich, kann zwischen den inneren Gassen 12 wenigstens auch eine innere Gasse 12' angeordnet sein. Die inneren Gasse 12 unterscheiden sich von den inneren Gassen 12' im wesentlichen durch ihre jeweilige Breite 14, 14' und dem darin verwendeten Fördermittel. Zudem wird eine innere Gasse 12' dadurch gebildet, daß sie zwischen wenigstens zwei inneren Gassen 12 bzw. zwischen wenigstens einer inneren Gasse 12 und wenigstens einer äußeren Gasse 6 angeordnet ist. Die innere Gasse 12' kann in analoger Weise auch im äußeren Bereich 10 angeordnet sein, indem sie z. B. zwischen wenigstens zwei äußeren Gassen 6 angeordnet ist. Die Anzahl der jeweiligen Gassen, insbesondere der inneren Gassen 12, 12' ist beliebig.

Die inneren Gassen 12' werden zur Kommissionierung verwendet, und als Fördermittel können in den inneren Gassen im wesentlichen Gabelstapler 16 zum Einsatz kommen.

Innerhalb der inneren Gasse 12 werden flurfreie Regalbediengeräte in der Art gemäß der Gebrauchsmusterschrift DE 202 03 604 U1 verwendet, die in Figur mit dem Bezugszeichen 18 bezeichnet sind.

Der innere Bereich 4 weist angeordnet zu seiner Mitte eine Verbindungsgasse 20 auf, die orthogonal zur Längserstreckungsrichtung der inneren Gassen 12, 12' angeordnet ist, die wiederum im wesentlichen parallel zueinander angeordnet sind.

In diesem Ausführungsbeispiel teilt die verbindungsgasse 20 die Regale 8 des inneren Bereiches 4 in einem Teilungsverhältnis 1 zu 1 zu ihrer Längserstrekkungsrichtung. Die Erfindung ist auf dieses Teilungsverhältnis nicht begrenzt. So kann dieses Teilungsverhältnis variieren, insbesondere wenn die Längserstrekkung der Regale 8 unterschiedlich zueinander ist.

Zudem können anstelle einer Verbindungsgasse 20 im inneren Bereich 4 mehrere Verbindungsgassen 20 angeordnet sein, die nicht zueinander parallel angeordnet und in ihrer Erstreckung nicht auf den inneren Bereich 4 beschränkt sein müssen.

Die Ausrichtung der Verbindungsgasse 20 muß zudem nicht zwingend orthogonal zur Längserstreckungsrichtung der inneren Gassen 12 sein, sondern kann auch in einem anderen Winkel zu diesen angeordnet sein.

In den äußeren Bereichen 10 können ebenfalls jeweils Verbindungsgassen 20 angeordnet sein, die in ihrer Anordnung nicht mit den Verbindungsgassen 20 des inneren Bereiches 4 übereinstimmen müssen.

Im äußeren Bereich 10 werden flurgebundene Regalbediengeräte 22 verwendet, die bei diesem Ausführungsbeispiel Regalförderzeuge sind. Die äußeren Bereiche 10 sind jeweils durch eine äußere Gasse 6 gebildet.

Die Erfindung ist darauf nicht beschränkt, so daß im jeweiligen äußeren Bereich 10 auch mehrere äußere Gassen 6 angeordnet sein können, die sich insbesondere in ihrer Ausführungsart und Anordnung von den inneren Gassen 12, 12' des inneren Bereichs 4 unterscheiden können.

Den jeweiligen Gassen 6, 12, 12' sind jeweils zwei Regale 8 zugeordnet. Die Erfindung ist darauf nicht beschränkt, so daß beispielsweise auch eine gemeinsame Nutzung eines Regals 8 durch z. B. zwei Regalbediengerät 18, 22 möglich ist. Dadurch kann ein Regal 8 beispielsweise insbesondere im Übergangsbereich 24 von einem inneren Bereich 4 zu einem äußeren Bereich 10 sowohl einer äußeren Gasse 6 wie auch einer inneren Gasse 12 bzw. einer inneren Gasse 12' zugeordnet sein.

Die Quererstreckung der jeweiligen inneren bzw. äußeren Gassen 6, 12, 12' ist in diesem Ausführungsbeispiel jeweils gleich, jedoch insbesondere zur inneren Gasse 12' unterschiedlich. Die inneren Gassen 12, 12' wie auch die äußeren Gassen 6 können auch jeweils untereinander ungleich sein, was insbesondere dann der Fall ist, wenn beispielsweise wenigstens ein Regalbediengerät 18 und wenigstens ein anderes Fördermittel, wie beispielsweise ein Gabelstapler 16, einer inneren Gasse 12 zugeordnet sind.

Erfindungsgemäß ist ein Bereich 4, 10 im wesentlichen durch das darin verwendete Regalbediengerät 18, 22 gekennzeichnet. Daher wird in einem äußeren bzw. inneren Bereich 4 jeweils nur eine Regalbediengeräteart 18 verwendet. Eine Kombination unterschiedlicher Ausführungsarten von Regalbediengeräten, also ein flurgebundenes Regalbediengerät 18 mit einem flurfreien Regalbediengerät 22, ist erfindungsgemäß unzulässig.

Die Kombination einer Art eines Regalbediengerätes 18, 22 mit einem davon abweichenden Fördermittel, wie beispielsweise einem Gabelstapler 16 oder Hubwagen aber auch Stetigförderer (z. B. Förderbänder), ist hingegen erfindungsgemäß zulässig. Ferner können verschiedene Ausführungsformen (Typen) jeweils einer Regalbediengeräteart 18, 22 (flurgebunden/ flurfrei) in dem jeweiligen Bereich 4, 10 miteinander kombiniert werden.

## Patentansprüche

1. Lageranordnung (2) zur Ein- und Auslagerung von Lagergut an bzw. von Lagerplätzen,
mit einer Regalanordnung, die eine Mehrzahl von Regalen (8) aufweist, die eine Mehrzahl von Gassen (6, 12) begrenzen, die wenigstens zwei äußere Gassen (6) und wenigstens eine innere Gasse (12) aufweisen,
wobei ein äußerer Bereich (10) und ein innerer Bereich (4) gebildet ist, die bezogen auf die Regalbediengerätart (flurfrei/flurgebunden) jeweils homogen sind,
mit Regalbediengeräten (18, 22) zur Ein- und Auslagerung von Lagergut an bzw. von Lagerplätzen,
wobei wenigstens ein flurgebundenes Regalbediengerät (22) und wenigstens ein flurfreies Regalbediengerät (18) vorgesehen sind,
wobei zur Bedienung der in dem äußeren Bereich (10) vorgesehenen Lagerplätze wenigstens ein flurgebundenes Regalbediengerät (22) vorgesehen ist und
wobei zur Bedienung der in dem inneren Bereich (4) vorgesehenen Lagerplätze wenigstens ein flurfreies Regalbediengerät (18) vorgesehen ist,
wobei in einer im wesentlichen orthogonalen Richtung zur Längserstreckungsrichtung wenigstens einer inneren Gasse (12, 12') wenigstens eine verbindungsgasse (20) zwischen wenigstens zwei inneren Gassen (12, 12') angeordnet ist.

2. Lageranordnung nach Anspruch 1, **dadurch gekennzeichnet, dass** das flurgebundene Regalbediengerät (22) ein Regalförderzeug ist.

3. Lageranordnung nach einem der Ansprüche 1 oder 2, **dadurch gekennzeichnet, dass** das flurfreie Regalbediengerät (18) ein an einer Krankatze angeordnetes Lastaufnahmemittel aufweist.

## Claims

1. Storage arrangement (2) for storing goods in and retrieving goods from storage locations,
comprising a shelf arrangement with a plurality of shelves (8) which delimit a plurality of lanes (6, 12), comprising at least two outer lanes (6) and at least one inner lane (12),
wherein an outer area (10) and an an inner area (4) are formed which are homogenous with respect to the storage and retrieval machine (floor bound/overhead),
comprising storage and retrieval machines (18, 22) for storing goods in and retrieving goods from storage locations,
wherein at least one floor-bound storage and retrieval machine (22) and at least one overhead storage and retrieval machine (18) are provided, wherein to operate the storage locations provided in the outer area (10) at least one floor-bound storage and retrieval machine (22) is provided and wherein to operate the storage locations provided in the inner area (4) at least one overhead storage and retrieval machine (18) is provided,
wherein in an essentially orthogonal direction to the longitudinal direction of extension of at least one inner lane (12, 12') at least one connecting lane (20) is arranged between at least two inner lanes (12, 12').

2. Storage arrangement according to claim 1, **characterised in that** the floor-bound storage and retrieval machine (22) is a storage and retrieval vehicle.

3. Storage arrangement according to either claim 1 or claim 2, **characterised in that** the floor-bound storage and retrieval machine (18) comprises a load suspension device arranged on a crane trolley.

## Revendications

1. Dispositif de stockage (2) pour l'entrée et la sortie de marchandises stockées dans et hors d'emplacements de stockage,
avec un dispositif à étagères, qui comprend une pluralité d'étagères (8), qui délimitent une pluralité de passages (6, 12), qui comprennent au moins deux passages extérieurs (6) et au moins un passage intérieur (12),
une zone extérieure (10) et une zone intérieure (4) étant formées, qui sont homogènes par rapport au type d'appareil de commande des étagères (aérien/au sol),
avec des appareils de commande d'étagères (18, 22) pour l'entrée et la sortie de marchandises stockées dans et hors d'emplacements de stockage,
au moins un appareil de commande d'étagères au sol (22) et au moins un appareil de commande d'étagères aérien (18) étant prévus,
au moins un appareil de commande d'étagères au sol (22) étant prévu pour la commande des emplacements de stockage prévus dans la zone extérieure (10) et
au moins un appareil de commande d'étagères aérien (18) étant prévu pour la commande des emplacements de stockage prévus dans la zone intérieure (4),
au moins un passage de liaison (20) étant disposé entre au moins deux passages intérieurs (12, 12') dans une direction globalement orthogonale à la direction de l'extension longitudinale d'au moins un passage intérieur (12, 12').

2. Dispositif de stockage selon la revendication 1, **caractérisé en ce que** l'appareil de commande d'étagères au sol (22) est un dispositif de convoyage d'étagères.

3. Dispositif de stockage selon l'une des revendications 1 ou 2, **caractérisé en ce que** l'appareil de commande d'étagères aérien (18) comprend un accessoire de levage disposé sur un palan.
